# EUROPEAN PATENT SPECIFICATION

(11) **EP 0 442 555 B1**
(45) Date of publication and mention of the grant of the patent: **27.12.1995**
(21) Application number: 91200167.4
(22) Date of filing: 28.01.1991
(51) Int. Cl.: C08G 67/02

(54) **Continuous process for the preparation of polymers of carbon monoxide with one or more olefinically unsaturated compounds**
Kontinuierliches Verfahren zur Herstellung von Polymeren aus Kohlenmonoxyd und von einer oder mehreren olefinisch ungesättigten Verbindungen
Procédé continu de préparation de polymères de l'oxyde de carbone et d'un ou de plusieurs composés oléfiniques non saturés

(30) Priority: 30.01.1990 NL 9000220
(43) Date of publication of application: 21.08.1991
(73) Proprietor: SHELL INTERNATIONALE RESEARCH MAATSCHAPPIJ B.V., 2596 HR Den Haag (NL)
(72) Inventor: Mastenbroek, Barend, NL-1031 CM Amsterdam (NL); Petrus, Leonardus, NL-1031 CM Amsterdam (NL)

(56) References cited:
- EP-A- 0 254 343
- EP-A- 0 257 663
- EP-A- 0 305 011

## Description

The invention relates to a process for the preparation of polymers of carbon monoxide with one or more olefinically unsaturated compounds.

The relevant polymers are linear polymers of carbon monoxide with one or more olefinically unsaturated compounds in which polymers the units originating from carbon monoxide and the units originating from the olefinically unsaturated compounds are present in an alternating order. These polymers can be prepared by contacting the monomers at elevated temperature and pressure with a catalyst based on
a) a Group VIII metal compound,
b) a halomonocarboxylic acid,
c) a ligand containing at least two phosphorus-, nitrogen- or sulphur-containing dentate groups which ligand can form a complex with the Group VIII metal.

In the aforesaid polymer preparation, both the polymerization rate and the average molecular weight play an important role. On the one hand it is desirable to achieve the highest possible polymerization rate, while on the other band, as regards their applications, the polymers are more valuable the higher their average molecular weight. Both the polymerization rate and the average molecular weight can be influenced by the temperature applied in the polymerization. Unfortunately, the effect of the temperature on the polymerization rate and on the average molecular weight is in opposite directions, in that an increase in the reaction temperature, whilst leaving other reaction conditions unchanged, leads to an increase in the polymerization rate, but also to a decrease in the average molecular weight of the resulting polymers. In practice, this implies that the reaction temperature is chosen so as to obtain polymers with an average molecular weight that is sufficiently high for the particular application and that the polymerization rate corresponding to that temperature has to be accepted.

In the course of an investigation by the Applicant into the use of the above-mentioned catalysts for batchwise preparation of the present polymers, it was found that the catalyst's behaviour is determined to a large extent by the quantity of component b) in the catalyst relative to the quantity of component a). For a given reaction temperature, higher polymerization rates could be achieved and polymers with a higher average molecular weight could be obtained according as the quantity of component b) used in the catalyst was higher. This influence of the quantity of component b) on the polymerization rate and the average molecular weight of the polymers holds over a wide range and reaches a maximum value at a quantity of component b) in the catalyst of about 10 mol per mol Group VIII metal. Above 10 mol/mol no significant rise in the polymerization rate or the average molecular weight is observed upon further raising the quantity of component b). In view of the favourable effect of a high quantity of component b) in the catalyst, both on the polymerization rate and on the average molecular weight of the obtained polymers, it was hitherto customary to use in the batchwise preparation of the present polymers a catalyst containing at least 10 mol component b) per mol Group VIII metal.

During a previous investigation carried out by the Applicant into the present polymer preparation it was found that this preparation can be carried out continuously as well as batchwise. For the preparation of the polymers on a commercial scale, a continuous process is much to be preferred to a batch process, for the following reasons. Firstly, the continuous process gives a higher polymer production, since the production does not have to be regularly interrupted for the loading and discharging of the reactor, which is the case with batchwise preparation. Secondly, as the continuous process, in contrast with the batchwise production, is characterized by the fact that all reaction parameters remain substantially constant, a continuous process is easier to regulate and to automatize. Finally, the continuous process produces polymers which display less variation in their properties and therefore possess a more constant quality than those obtained from batchwise production.

The Applicant has carried out an extensive investigation into the continuous preparation of the present polymers using the above-mentioned catalysts. Assuming that the same rules would apply for the optimum composition of the catalyst for continuous polymer preparation as had previously been found with batchwise preparation, initially catalysts which contained at least 10 mol of component b) per mol Group VIII metal were, successfully, used in the experimentation programme on continuous polymer preparation. Example of such continuous polymer preparations are disclosed in EP-A-305011.

In view of the extremely small quantities of catalyst needed in the preparation of the present polymers, the use of a high quantity of component b) in the catalyst can hardly be considered as a drawback from the point of view of process costs. However, the use of a catalyst with a high concentration of component b) gives rise to another problem which is due to the fact that in the present polymer preparation some of the catalyst remains behind in the polymers. A relatively high concentration of component b) in the polymers can be disadvantageous to the stability of the polymers. Owing to the generally high melting point of the polymers, this can lead to problems such as discolouration and decomposition during the processing of the polymers in the molten state. Although the concentration of component b) in the polymers can be reduced by employing one or more wash steps, this will of course add considerable extra costs when employed on a commercial scale.

In the course of the Applicant's investigation into the continuous preparation of the present polymers, it has surprisingly been found that, in complete contrast to what had previously been observed with the batchwise preparation, the quantity of component b) in the catalyst could be drastically reduced to less than 6 mol per mol Group VIII metal without a consequent reduction in the average molecular weight of the polymers. Another surprise, also quite contrary to what was expected on the basis of previous observations with the batchwise preparation, was that when the quantity of component b) in the catalyst was reduced to below 6 mol per mol Group VIII metal, the polymerization rate increased.

The present patent application therefore relates to a process for the preparation of polymers in which linear polymers of carbon monoxide with one or more olefinically unsaturated compounds in which polymers the units originating from carbon monoxide and the units originating from the olefinically unsaturated compound(s) are present in an alternating order, are prepared in a continuous manner by contacting the monomers at elevated temperature and pressure with a catalyst based on
a) a Group VIII metal compound,
b) a halomonocarboxylic acid,
c) a ligand containing at least two phosphorus-, nitrogen- or sulphur-containing dentate groups which ligand can form a complex with the Group VIII metal, and
which catalyst contains less than 6 mol of component b) per mol Group VIII metal.

In this patent application Group VIII metals are understood to be the noble metals ruthenium, rhodium, palladium, osmium, iridium and platinum, as well as the iron group metals iron, cobalt and nickel. Catalysts containing a Group VIII metal selected from palladium, nickel and cobalt are preferred in the process according to the invention. Palladium is particularly preferred as Group VIII metal. The Group VIII metal is preferably incorporated in the catalyst in the form of a salt of a carboxylic acid, in particular in the form of an acetate.

In the catalyst used in the process according to the invention, a halomonocarboxylic acid is incorporated as component b). The halomonocarboxylic acid preferably has a pKa of less than 2. Fluorinesubstituted monocarboxylic acids are also preferred. Examples of suitable compounds which can be incorporated in the catalysts as component b) are difluoroacetic acid, trifluoroacetic acid, pentafluoropropionic acid and heptafluorobutyric acid. The use of trifluoroacetic acid as component b) is preferred.

In the catalysts used in the process according to the invention, component b) should be present in a quantity of less than 6 mol per mol Group VIII metal. The catalysts preferably contain 0.5-5 and in particular 1-4 mol of component b) per mol Group VIII metal.

In addition to components a) and b), the catalyst used in the process according to the invention should include as component c) a ligand containing at least two phosphorus-, nitrogen- or sulphur-containing dentate groups which ligand can form a complex with the Group VIII metal.

If as component c) a ligand is used which can complex with the Group VIII metal via sulphur-containing dentate groups, a component c) is preferred with the general formula R¹S-R-SR¹ in which R¹ is an optionally polar substituted hydrocarbyl group and R represents a divalent organic bridging group containing at least two carbon atoms in the bridge. Examples of such compounds are 1,2-bis(ethylthio)-ethane, cis-1,2-bis(benzylthio)ethene and 1,2-bis(phenyl-thio)propane.

If as component c) a ligand is used which can complex with the Group VIII metal via nitrogen-containing dentate groups, a component c) is preferred with the general formula 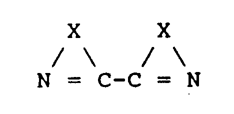
in which X represents an organic bridging group containing three or four atoms in the bridge, of which at least two are carbon atoms. An example of such a compound is 2,2'-bipyridine. An example of another suitable nitrogen containing ligand is 1,10-phenanthroline.

Preferably, a ligand is used as component c) which can complex with the Group VIII metal via phosphorus-containing dentate groups. Although this can be satisfied by ligands containing more than two dentate groups, such as the tetradentate ligand 1,8-bis[bis(2-methoxyphenyl)phosphino]-2,7-bis-[bis(2-methoxyphenyl)-phosphinomethyl]octane, bidentate ligands are preferred. If such a bidentate ligand is used as component c), a compound with the general formula (R¹)₂P-R-P(R¹)₂ is preferred in which R and R¹ have the meanings given hereinbefore. In that case, particular preference is given to a compound in which R¹ represents an aryl group carrying an alkoxy group as substituent at the ortho position relative to the phosphorus atom and the group represented by R contains three atoms in the bridge. An example of such a compound is 1,3-bis[bis(2-methoxyphenyl)phosphino]-propane.

If as component c) a ligand is used which can complex with the Group VIII metal via sulphur- or nitrogen-containing dentate groups, the quantity of component c) employed is preferably 0.5-100 and in particular 1-50 mol per mol Group VIII metal. If a ligand is used that can complex with the Group VIII metal via phosphorus-containing dentate groups, the quantity employed is preferably 0.5-2 and in particular 0.75-1.5 mol per mol Group VIII metal.

To enhance the activity of the catalysts, a 1,4-quinone can also be included therein as component d). 1,4-benzoquinone and 1,4-naphthoquinone are very suitable for this purpose. The quantity of 1,4-quinone is preferably 5-5000 and in particular 10-1000 mol per mol Group VIII metal.

Olefinically unsaturated compounds which, in accordance with the invention, can be polymerized with carbon monoxide include compounds consisting exclusively of carbon and hydrogen, as well as compounds which in addition to carbon and hydrogen also contain one or more heteroatoms. The process according to the invention is preferably used for the preparation of polymers of carbon monoxide with one or more olefinically unsaturated hydrocarbons. Examples of suitable hydrocarbon monomers are ethene, propene, butene-1, hexene-1, octene-1, styrene, cyclopentene, norbornene and dicyclopentadiene. The process according to the invention is particularly very suitable for the preparation of copolymers of carbon monoxide with ethene and the preparation of terpolymers of carbon monoxide with ethene and another olefinically unsaturated hydrocarbon, such as an α-olefin, in particular propene.

The quantity of catalyst used in the process according to the invention may vary within wide limits. Preferably, the quantity of catalyst employed per mol olefinically unsaturated compound to be polymerized contains 10⁻⁷ to 10⁻³ and in particular 10⁻⁶ to 10⁻⁴ mol Group VIII metal.

In the process according to the invention the contacting of the monomers with the catalyst is preferably carried out in the presence of a diluent in which the polymers are insoluble. Lower aliphatic alcohols are very suitable for this purpose, methanol in particular.

The process according to the invention is preferably carried out in two or more reactors connected in series. If reactors connected in series are used, preferably two or three reactors are used.

The polymerization is preferably carried out at a temperature of 25-150°C and a pressure of 2-150 bar and in particular at a temperature of 30-130°C and a pressure of 5-100 bar. The molar ratio of the olefinically unsaturated compounds relative to carbon monoxide is preferably 10:1 to 1:10 and in particular 5:1 to 1:5.

The higher the average molecular weight of the present polymers, the higher will be their intrinsic viscosity. The designation "Limiting Viscosity Number" (LVN), recommended by the International Union of Pure and Applied Chemistry, will hereinafter be used instead of "intrinsic viscosity". For the determination of the LVN of the polymers, first four solutions are prepared by dissolving the polymer in four concentrations in meta-cresol. For each of the solutions the viscosity at 60°C relative to meta-cresol at 60°C is determined in a viscometer. If Tₒ represents the outflow time of meta-cresol and Tₚ the outflow time of the polymer solution, the relative viscosity (ηᵣₑₗ) is obtained from ${\text{η}}_{\text{rel}} {\text{= (T}}_{\text{p}} {\text{/T}}_{\text{o}} \text{)}$ . The inherent viscosity (ηᵢₙₕ) can be calculated from ηᵣₑₗ according to the formula ${\text{η}}_{\text{inh}} {\text{= (ln η}}_{\text{rel}} \text{)/c}$ where c represents the concentration of the polymer in grams per 100 ml solution.

The LVN, in dl/g, can now be found by graphically plotting ηᵢₙₕ for each of the four polymer solutions against the corresponding concentration (c) and then extrapolating to c = 0.

The polymers of this invention can be processed into articles of manufacture such as fibres, films, laminates, tubes, piping and articles having an intricate shape by any melt processing technique, such as melt spinning, extrusion and co-extrusion, injection moulding and compression moulding. The polymers may be used in the form of a powder, or as a granulate, which may have been obtained by a melt processing technique.

The process of the invention does not only improve the melt stability of the present polymers, but it also renders the polymers better processable in melt processing operations. Thus they render processable certain types of copolymers which were hardly processable before the present invention.

The invention will now be illustrated by the following examples.

### EXAMPLE 1

A carbon monoxide/ethene copolymer was prepared as follows. 200 ml methanol was introduced into a mechanically stirred autoclave with a capacity of 300 ml. After the contents of the autoclave had been brought to 90°C, quantities of ethene and carbon monoxide were forced into the autoclave until the ethene partial pressure reached 33 bar and the carbon monoxide partial pressure reached 22 bar. Subsequently, a catalyst solution consisting of
23.5 ml methanol,
1.5 ml toluene,
0.01 mmol palladium acetate,
0.02 mmol trifluoroacetic acid, and
0.01 mmol 1,3-bis[bis(2-methoxyphenyl)phosphino]propane was introduced into the autoclave.

The pressure in the autoclave was maintained by supplying a 1:1 carbon monoxide/ethene mixture. The polymerization was terminated after 3 hours by cooling the reaction mixture to room temperature and releasing the pressure. The copolymer was filtered off, washed with methanol and dried. 15.9 g copolymer was obtained. The polymerization rate was 5 kg copolymer/(g palladium.hour). The copolymer had an LVN of 0.5 dl/g.

### EXAMPLE 2

A carbon monoxide/ethene copolymer was prepared in virtually the same manner as in example 1, but with the difference that the catalyst solution contained 0.04 mmol trifluoroacetic acid instead of 0.02 mmol. 22.3 g copolymer was obtained. The polymerization rate was 7 kg copolymer/(g palladium.hour). The copolymer had an LVN of 0.8 dl/g.

### EXAMPLE 3

A carbon monoxide/ethene copolymer was prepared in virtually the same manner as in example 1, but with the following differences
a) a catalyst solution was used consisting of:
   23.5 ml methanol,
   1.5 ml toluene,
   0.0055 mmol palladium acetate,
   0.055 mmol trifluoroacetic acid, and
   0.0066 mmol 1,3-bis[bis(2-methoxyphenyl)phosphino]propane, and
b) the reaction time was 2 hours instead of 3 hours.

18.6 g copolymer was obtained. The polymerization rate was 16 kg copolymer/(g palladium.hour). The copolymer had an LVN of 1.0 dl/g.

### EXAMPLE 4

A carbon monoxide/ethene copolymer was prepared in virtually the same manner as in example 3, but with the difference that the catalyst solution contained 0.11 mmol trifluoroacetic acid instead of 0.055 mmol. 19.8 g copolymer was obtained. The polymerization rate was 17 kg copolymer/(g palladium.hour). The copolymer had an LVN of 1.0 dl/g.

### EXAMPLE 5

A carbon monoxide/ethene copolymer was prepared in virtually the same manner as in example 3, but with the difference that the catalyst solution contained 0.165 mmol trifluoroacetic acid instead of 0.055 mmol. 17.5 g copolymer was obtained. The polymerization rate was 15 kg copolymer/(g palladium.hour). The copolymer had an LVN of 0.9 dl/g.

### EXAMPLE 6

A carbon monoxide/ethene copolymer was prepared in virtually the same manner as in example 3, but with the difference that the catalyst solution contained 0.33 mmol trifluoroacetic acid instead of 0.055 mmol. 18.7 g copolymer was obtained. The polymerization rate was 16 kg copolymer/(g palladium.hour). The copolymer had an LVN of 1.0 dl/g.

### EXAMPLE 7

A carbon monoxide/ethene/propene terpolymer was prepared as follows. 125 ml methanol was introduced into a mechanically stirred autoclave with a capacity of 300 ml. After the contents of the autoclave had been brought to 65°C, quantities of ethene, propene and carbon monoxide were introduced into the autoclave until the ethene partial pressure reached 21 bar, the propene partial pressure reached 15 bar and the carbon monoxide partial pressure reached 20 bar. Subsequently, a catalyst solution consisting of
25 ml methanol,
0.01 mmol palladium acetate,
0.02 mmol trifluoroacetic acid, and
0.012 mmol 1,3-bis(diphenylphosphino)propane
was introduced into the autoclave.

The pressure in the autoclave was maintained by supplying a 1:1 carbon monoxide/ethene mixture. The polymerization was terminated after 10 hours by cooling the reaction mixture to room temperature and releasing the pressure. The terpolymer was filtered off, washed with methanol and dried. 10 g terpolymer was obtained. The polymerization rate was 0.9 kg terpolymer/(g palladium.hour). The terpolymer had an LVN of 0.4 dl/g.

### EXAMPLE 8

A carbon monoxide/ethene/propene terpolymer was prepared in virtually the same manner as in example 7, but with the difference that the catalyst solution contained 0.20 mmol trifluoroacetic acid instead of 0.02 mmol. 18 g terpolymer was obtained. The polymerization rate was 1.7 kg terpolymer/(g palladium.hour). The terpolymer had an LVN of 0.6 dl/g.

### EXAMPLES 9-12

In these examples carbon monoxide/ethene/propene terpolymers were prepared by a continuous process using a catalyst solution containing per ℓ acetone 1.10 g palladium acetate, 2.74 g 1,3-bis[bis(2-methoxyphenyl)phosphino]propane and varying quantities of trifluoroacetic acid. The reaction conditions and the results obtained in the various examples are given in Table I.

### EXAMPLES 13 and 14

In these examples carbon monoxide/ethene/propene terpolymers were prepared by a continuous process in two reactors connected in series, the reaction product of the first reactor, together with fresh feed (monomer) components, being fed continuously to the second reactor. The pressure in the reactors was maintained by discharging the excess feed gases from the second reactor. The series-connected reactors had substantially the same gas phase composition. In examples 13 and 14 the same catalyst solutions were used as in examples 10 and 12, respectively. The reaction conditions and the results obtained in the various examples are given in Table II.

Of the examples 1-14, examples 11, 12 and 14 are in accordance with the invention. In these examples the polymer preparation was carried out by a continuous process using a catalyst containing less than 6 mol trifluoroacetic acid per mol palladium. Examples 1-10 and 13 fall outside the scope of the invention and are included in the patent application for the purposes of comparison. In examples 1-8 the polymer preparation was carried out batchwise. Although in examples 9, 10 and 13 the polymer preparation was carried out as a continuous process, a catalyst was used which contained more than 6 mol trifluoroacetic acid per mol palladium.

The influence of the quantity of the halomonocarboxylic acid in the catalyst on the polymerization rate and the average molecular weight in the batchwise polymerization can be clearly seen by comparison of the results of examples 1, 2 and 3. As the quantity of acid rises from 2 via 4 to 10 mol per mol palladium, the polymerization rate rises from 5 via 7 to 16 kg copolymer/(g palladium.hour) and the LVN from 0.5 via 0.8 to 1.0 dl/g. A similar influence of the quantity of acid is observed upon comparison of the results of examples 7 and 8. An increase in the quantity of acid from 2 to 20 mol per mol palladium results in an increase of the polymerization rate from 0.9 to 1.7 kg terpolymer/(g palladium.hour) and of the LVN from 0.4 to 0.6 dl/g.

By comparing the results of examples 4, 5 and 6 (carried out with catalysts in which the quantity of acid was 20, 30 and 60 mol per mol palladium respectively) with those of example 3 (carried out with a catalyst in which the quantity of acid was 10 mol per mol palladium), it can be seen that a rise in the quantity of acid to values above 10 mol per mol palladium does not lead to any significant improvement in the polymerization rate or the average molecular weight in the batchwise polymer preparation. A similar conclusion can be drawn from a comparison of the results in the continuous examples 9 and 10 (carried out with catalysts in which the quantity of acid was 20 and 10 mol per mol palladium respectively).

The favourable effect found if, in accordance with the invention, the continuous polymer preparation is carried out with a catalyst containing less than 6 mol trifluoroacetic acid per mol palladium can clearly be seen by comparing the results of examples 11 and 12 with those of example 10 and by comparing the results of example 14 with those of example 13. Contrary to what would be expected on the basis of the results of the experiments with the batchwise process, viz. a fall in both the polymerization rate and the average molecular weight, in the continuous polymer preparation a reduction of the quantity of acid to below 6 mol per mol palladium resulted in a rise in the polymerization rate, while the LVN remained constant.

By means of ¹³C-NMR analysis it was established that the carbon monoxide/ethene copolymers prepared according to examples 1-6 and the carbon monoxide/ethene/propene terpolymers prepared according to examples 7-14 consisted of linear chains in which on the one hand the units originating from carbon monoxide and on the other hand the units originating from ethene or from ethene and propene occurred in an alternating order. In the terpolymer chains the units originating from ethene and propene were distributed in a random manner.

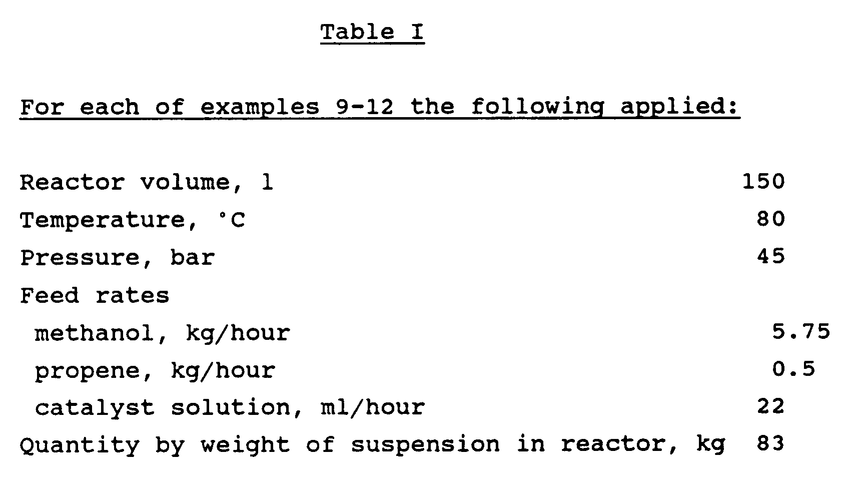

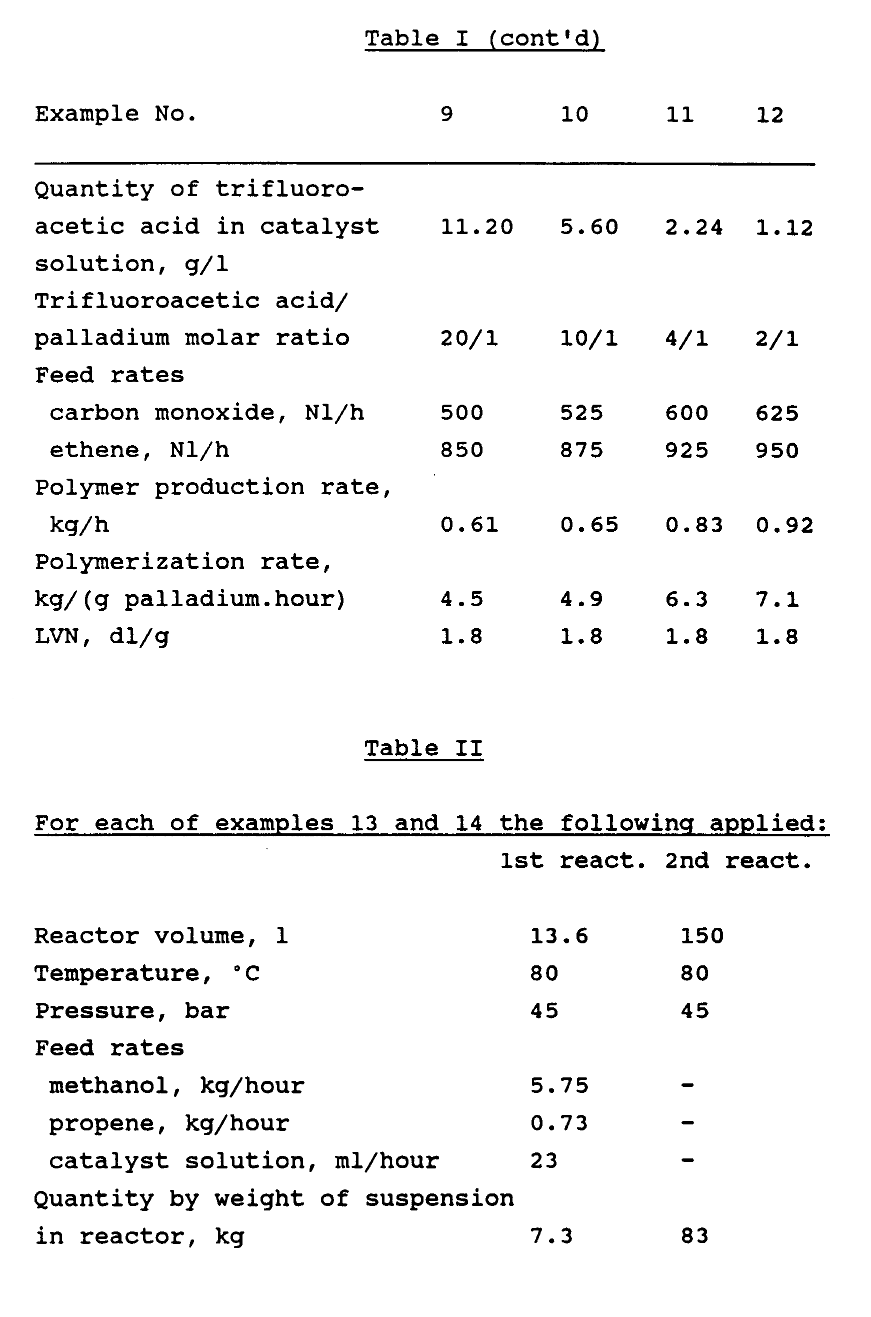

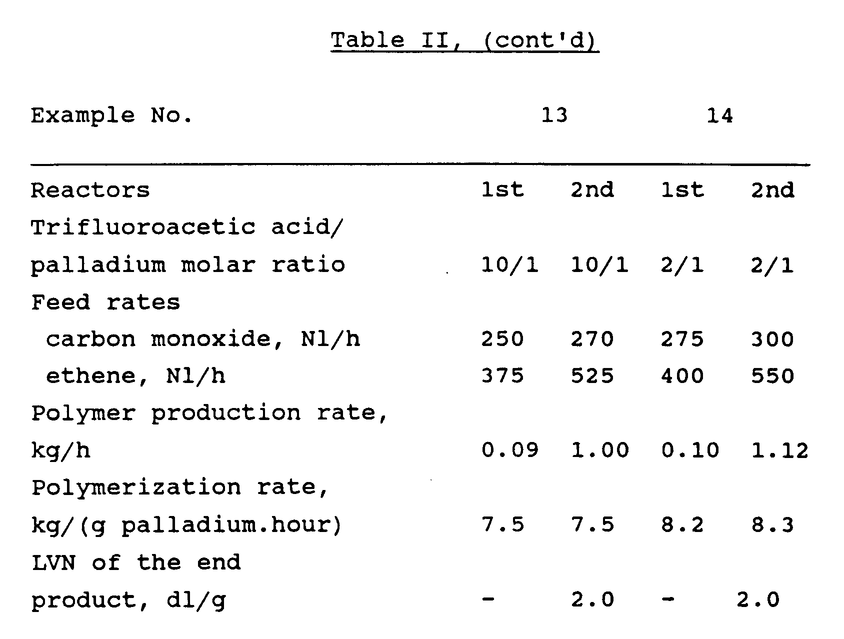

## Claims

1. Process for the preparation of polymers, wherein linear polymers of carbon monoxide with one or more olefinically unsaturated compounds in which polymers the units originating from carbon monoxide and the units originating from the olefinically unsaturated compound(s) are present in an alternating order, are prepared in a continuous manner by contacting the monomers at elevated temperature and pressure with a catalyst based on
a) a Group VIII metal compound,
b) a halomonocarboxylic acid,
c) a ligand containing at least two phosphorus-, nitrogen- or sulphur-containing dentate groups which ligand can form a complex with the Group VIII metal, and
which catalyst contains less than 6 mol of component b) per mol Group VIII metal.

2. Process in accordance with claim 1, characterized in that the Group VIII metal compound in the catalyst contains palladium as Group VIII metal, and is included in the form of a salt of a carboxylic acid such as an acetate.

3. Process in accordance with claim 1 or 2, characterized in that a halomonocarboxylic acid with a pKa of less than 2 is included in the catalyst as component b).

4. Process in accordance with one or more of claims 1-3, characterized in that the catalyst contains 0.5-5 mol component b) per mol Group VIII metal.

5. Process in accordance with one or more of claims 1-4, characterized in that the catalyst contains as component c) a compound with the general formula (R¹)₂P-R-P(R¹)₂ in which R¹ represents an optionally polar substituted hydrocarbyl group and R represents a divalent organic bridge group containing at least two carbon atoms in the bridge.

6. Process in accordance with claim 5, characterized in that the catalyst contains per mol Group VIII metal 1-4 mol component b) and 0.75-1.5 mol component c).

7. Process in accordance with one or more of claims 1-6, characterized in that as olefinically unsaturated compounds one or more hydrocarbons are used, such as ethene or a mixture of ethene with another olefinically unsaturated hydrocarbon, such as propene.

8. Process in accordance with one or more of claims 1-7, characterized in that the contacting of the monomers with the catalyst is carried out in the presence of a diluent in which the polymers are insoluble.

9. Process in accordance with one or more of claims 1-8, characterized in that it is carried out in two or three reactors connected in series.

10. Process in accordance with one or more of claims 1-9, characterized in that per mol olefinically unsaturated compound to be polymerized a quantity of catalyst is employed which contains 10⁻⁶-10⁻⁴ mol Group VIII metal, and that the process is carried out in the presence of a lower aliphatic alcohol, such as methanol, as a diluent at a temperature of 30-130°C, a pressure of 5-100 bar and a molar ratio of the olefinically unsaturated compounds relative to carbon monoxide of 5:1 to 1:5.

## Patentansprüche

1. Verfahren zur Herstellung von Polymeren, wobei lineare Polymere aus Kohlenmonoxid und einer oder mehreren olefinisch ungesättigten Verbindungen, in denen die von Kohlenmonoxid stammenden Einheiten und die von der bzw. den olefinisch ungesättigten Verbindung bzw. Verbindungen stammenden Einheiten in alternierender Reihenfolge vorliegen, durch Kontaktierung der Monomere bei erhöhter Temperatur und erhöhtem Druck mit einem Katalysator auf der Basis
a) einer Verbindung eines Metalls aus Gruppe VIII,
b) einer Halogenmonocarbonsäure und
c) eines zur Komplexbildung mit dem Metall aus Gruppe VIII befähigten Liganden mit mindestens zwei phosphor-, stickstoff- oder schwefelhaltigen zähnigen Gruppen
auf kontinuierliche Weise hergestellt werden, wobei der Katalysator weniger als 6 Mol der Komponente b) pro Mol des Metalls aus Gruppe VIII enthält.

2. Verfahren nach Anspruch 1, dadurch gekennzeichnet, daß die Verbindung des Metalls aus Gruppe VIII in dem Katalysator als Metall aus Gruppe VIII Palladium enthalt und in Form eines Salzes einer Carbonsäure wie eines Acetats eingearbeitet wird.

3. Verfahren nach Anspruch 1 oder 2, dadurch gekennzeichnet, daß als Komponente b) eine Halogencarbonsäure mit einem pK_{S}-Wert von weniger als 2 in den Katalysator eingearbeitet wird.

4. Verfahren nach einem oder mehreren der Ansprüche 1-3, dadurch gekennzeichnet, daß der Katalysator 0,5-5 Mol der Komponente b) pro Mol des Metalls aus Gruppe VIII enthält.

5. Verfahren nach einem oder mehreren der Ansprüche 1-4, dadurch gekennzeichnet, daß der Katalysator als Komponente c) eine Verbindung der allgemeinen Formel (R¹)₂P-R-P(R¹)₂ enthält, worin R¹ eine gegebenenfalls polar substituierte aromatische Kohlenwasserstoffgruppe und R eine zweiwertige organische Brückengruppe mit mindestens zwei Kohlenstoffatomen in der Brücke bedeuten.

6. Verfahren nach Anspruch 5, dadurch gekennzeichnet, daß der Katalysator pro Mol des Metalls aus Gruppe VIII 1-4 Mol der Komponente b) und 0,75-1,5 Mol der Komponente c) enthält.

7. Verfahren nach einem oder mehreren der Ansprüche 1-6, dadurch gekennzeichnet, daß als olefinisch ungesättigte Verbindungen ein oder mehrere Kohlenwasserstoffe wie Ethen oder eine Mischung aus Ethen und einem weiteren ungesättigten Kohlenwasserstoff wie Propen eingesetzt werden.

8. Verfahren nach einem oder mehreren der Ansprüche 1-7, dadurch gekennzeichnet, daß die Kontaktierung der Monomere mit dem Katalysator in Gegenwart eines Verdünnungsmittels erfolgt, in dem die Polymere unlöslich sind.

9. Verfahren nach einem oder mehreren der Ansprüche 1-8, dadurch gekennzeichnet, daß es in Zwei oder drei in Reihe geschalteten Reaktoren durchgeführt wird.

10. Verfahren nach einem oder mehreren der Ansprüche 1-9, dadurch gekennzeichnet, daß pro Mol zu polymerisierender olefinisch ungesättigter Verbindung eine Katalysatormenge eingesetzt wird, die 10⁻⁶ - 10⁻⁴ Mol des Metalls aus Gruppe VIII enthält, und daß das Verfahren in Gegenwart eines niederen aliphatischen Alkohols wie Methanol als Verdünnungsmittel bei einer Temperatur von 30-130°C, einem Druck von 5-100 bar und einem Molverhältnis von olefinisch ungesättigten Verbindungen zu Kohlenmonoxid von 5:1 bis 1:5 durchgeführt wird.

## Revendications

1. Procédé de préparation de polymères conformément auquel on prépare des polymères linéaires du monoxyde de carbone avec un ou plusieurs composés à insaturation oléfinique, polymères dans lesquels les unités provenant du monoxyde de carbone et les unités tirant leur origine du ou des composés à insaturation oléfinique sont présentes en ordre alternant, d'une manière continue par la mise en contact des monomères à haute température et à pression élevée avec un catalyseur à base
a) d'un composé d'un métal du groupe VIII,
b) d'un acide halomonocarboxylique,
c) d'un ligand contenant au moins deux radicaux dentés comprenant du phosphore, de l'azote ou du soufre, lequel ligand peut former un complexe avec le métal du groupe VIII et
lequel catalyseur contient moins de 6 moles de composant b) par mole de métal du groupe VIII.

2. Procédé suivant la revendication 1, caractérisé en ce que le composé de métal du groupe VIII dans le catalyseur contient du palladium à titre de métal du groupe VIII et est incorporé sous la forme d'un sel d'un acide carboxylique, tel qu'un acétate.

3. Procédé suivant la revendication 1 ou 2, caractérisé en ce qu'un acide halomonocarboxylique avec un pKa inférieur à 2 est inclus dans le catalyseur à titre de composant b).

4. Procédé suivant une ou plusieurs des revendications 1 à 3, caractérisé en ce que le catalyseur contient 0,5 à 5 moles de composant b) par mole de métal du groupe VIII.

5. Procédé suivant ou une ou plusieurs des revendications 1 à 4, caractérisé en ce que le catalyseur contient, à titre de composant c), un composé répondant à la formule générale (R¹)₂P-R-P(R¹)₂ dans laquelle R¹ représente un radical hydrocarbyle à substitution polaire éventuelle et R représente un groupe de pontage organique divalent contenant au moins deux atomes de carbone dans le pont.

6. Procédé suivant la revendication 5, caractérisé en ce que le catalyseur contient, par mole de métal du groupe VIII, 1 à 4 moles de composant b) et 0,75 à 1,5 mole de composant c).

7. Procédé suivant une ou plusieurs des revendications 1 à 6, caractérisé en ce que l'on utilise, à titre de composés à insaturation oléfinique, un ou plusieurs hydrocarbures, comme de l'éthène ou un mélange d'éthène et d'un autre hydrocarbure à insaturation oléfinique, comme le propène.

8. Procédé suivant une ou plusieurs des revendications 1 à 7, caractérisé en ce que la mise en contact des monomères avec le catalyseur s'effectue en présence d'un diluant dans lequel les polymères sont insolubles.

9. Procédé suivant une ou plusieurs des revendications 1 à 8, caractérisé en ce qu'on l'entreprend dans deux ou trois réacteurs raccordés en série.

10. Procédé suivant une ou plusieurs des revendications 1 à 9, caractérisé en ce que, par mode de composé à insaturation oléfinique à polymériser, on utilise une quantité de catalyseur qui contient 10⁻⁶ à 10⁻⁴ mole de métal du groupe VIII et on entreprend le procédé en présence d'un alcool aliphatique inférieur, comme le méthanol, servant de diluant, à une température de 30 à 130°C, une pression de 5 à 100 bars et avec un rapport molaire des composés à insaturation oléfinique au monoxyde de carbone de 5:1 à 1:5.
